Europäisches Patentamt

European Patent Office

Office européen des brevets

(19)

(11) **EP 1 473 672 A1**

(12) **EUROPEAN PATENT APPLICATION**

(43) Date of publication:
**03.11.2004 Bulletin 2004/45**

(51) Int Cl.⁷: **G06T 7/00**, G06T 17/40

(21) Application number: **03008877.7**

(22) Date of filing: **29.04.2003**

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(71) Applicant: **Deutsches Krebsforschungszentrum
Stiftung des öffentlichen Rechts
69120 Heidelberg (DE)**

(72) Inventors:
• **Le-Huu, Martin
  69126 Heidelberg (DE)**
• **Kiessling, Fabian
  69121 Heidelberg (DE)**
• **Kunert, Tobias
  70191 Stuttgart (DE)**

• **Thorn, Matthias
  69123 Heidelberg (DE)**
• **Vosseler, Silvia
  69126 Heidelberg (DE)**
• **Van Kaick, Gerhard
  69120 Heidelberg (DE)**
• **Meinzer, Hans-Peter
  69117 Heidelberg (DE)**
• **Fusenig, Norbert
  69118 Heidelberg (DE)**

(74) Representative: **Isenbruck, Günter, Dr.
Isenbruck, Bösl, Hörschler, Wichmann, Huhn,
Patentanwälte
Theodor-Heuss-Anlage 12
68165 Mannheim (DE)**

(54) **3-dimensional visualization and quantification of histological sections**

(57)    The present invention relates to a method for the 3D reconstruction and visualization of histological data, particularly for comparison with radiological data. According to the method, a radiological image of a biological or non-biological specimen is created, said specimen is cut into histological sections, photographic images are taken of all or a subset of said histological sections, the resulting images are registered in the horizontal plane (XY-plane), a virtual stack of the images is created along in the vertical direction (along the Z-axis), a virtual section of the same thickness, level and direction as represented by the radiological image is created, a 2-dimensional image of said virtual section is created, and said 2-dimensional image is compared with the radiological image. In preferred embodiments, the invention provides additional methods particularly suited for the processing of large specimen.

EP 1 473 672 A1

**Description**

The invention relates to the 3-dimensional visualization and quantification of histological sections. The invention also relates to a method of comparing histolological and radiological data.

Modern biology and medicine aim to integrate data gained by different methods, e.g. data generated by histological and radiological methods.

Histological methods provide information at cellular and subcellular resolution. Modern histological methods additionally provide enzymatic and gene expression data. Equipment for histological data collection and analysis is relatively inexpensive and present in almost every laboratory. However, all histological methods are invasive, such that at least a tissue sample including the specimen has to be taken from the body. Another disadvantage is that histological sections usually provide information in only two dimensions. To reconstruct the 3-dimensional (3D) relationship, the researcher or physician usually has to try a difficult and error-prone mental act of imagination.

Radiological methods have recently become more widely available and provide 3D data sets by means of computed tomography. However, in many radiological methods the measurements are indirect and it is not clear, what biological entity is actually measured. Thus, it is imperative to verify and interpret radiological data on the basis of a more direct measurement (a "gold standard"), such as a histological analysis.

In contrast to histological sectioning, radiological methods are non- or minimal-invasive procedures. They can provide dynamic and functional (i.e. data regarding alterations over time respectively data regarding comparisons under different experimental conditions) data, e.g. on oxygenation, neuronal activity or blood flow. Radiological images are able to cover larger regions than most histological sections, but their resolution is limited (typically it is in the range of 1-2 mm).

In summary, histological and radiological methods can provide very different aspects of the same biological specimen and it would be highly desirable to integrate and directly compare the data of these different modalities.

Unfortunately, due to their different output formats, histological and radiological data are usually not compatible. As mentioned above, radiological images cover larger regions than most histological sections, but their resolution is much smaller. For example, a single histological section can not be directly compared with a radiological computed section, as it would be unclear whether the chosen section would be representative for the much thicker radiological section. In addition, the computed output format of radiological data is usually in the form of volumetric parameter maps, which are not comparable with 2-dimensional histological sections.

Higher resolution radiological images (resolution in the range of 10-100 µm) can be achieved by magnetic resonance microscopy (MRM). Thus, in the case of MRM, it would be conceivable to directly compare radiological images with corresponding histological sections. However, the coil systems in MRM devices are too small to allow in vivo imaging of specimen inside of large animals (larger than 10 cm diameter) or humans. Due to long scanning times required for MRM it is not possible to record dynamic or functional MR data. In addition, MRM equipment is very specialized and not widely available.

Some plastination methods could allow a direct comparison of radiological and anatomical data: E.g., blood vessels or other structures can be reconstructed by selectively stabilization using artificial resins. Plastination thus can provide 3D-visualization but only on a limited range of structures.

A more promising and versatile approach to enable comparison of histological and radiological data could be 3D-reconstruction and visualisation of histological data.

A manual procedure has been used to reconstruct enlarged models of human embryos. Images of the histological sections of the embryo were projected onto plywood and cut out manually. The plywood sections were aligned (registered) and glued together along the Z-axis (vertical direction) in the order of the original sections. Irregularities or misalignments were modeled with clay.

Another method for 3D reconstruction is based on images of thick histological sections (usually less than 200 µm). A series ("Z-series", because the images are taken along the vertical Z-axis) of images is taken by focusing through the section and taking images at different planes of focus. Due to the scatter outside of the plane of focus, each image contains mainly information of the given focal plane, thus resembling a virtual, optical section. Said Z-series of images can be used to generate a 3D reconstruction, especially as the images of the Z-series are already registered in the horizontal plane (the XY-plane). However, light scatter limits the resolution of the images and the 3D reconstruction, such that the size of the analyzed specimen is limited. In addition, many staining and labeling techniques can only be performed on thin sections (less than 20 µm, preferably less than 15 µm) and not on thick tissue samples. E.g. the described method would not allow to reconstruct the stained microvascularization of a tumor.

Modern confocal scanning microscopes (CSMs) allow to generate optical sections of fluorescently labeled specimen. However, the samples have to be transparent and the size of the specimen is limited, as light scatter in thicker specimen becomes untolerable. Usually, the specimen may not be thicker than 2 mm, in most cases not thicker than 200 µm. In addition, CSMs are costly, difficult to operate, and not available in many laboratories. Two-photon CSMs allow to image somewhat thicker specimen but they are even more costly and difficult to operate than conventional CSMs. In addition, many staining and labeling techniques can only be performed on thin sections (less than 20 µm, preferably less than 15 µm) and not on thick tissue samples.

Kay et al. (The Prostate, vol. 37, pp. 270-277 (1998)) present a computer-generated reconstruction of microvessels in prostate cancer foci. A cancer focus was sectioned and each section was photographed at low magnification, the images were registered, and a 3D reconstruction was generated. The distribution of microvessels was shown by 3D rendering and an analysis of the total content of microvessels was performed. Kay et al. aim at comparing histological data with magnetic resonance (MR) image data, but no methods are provided to overvome the obstacles mentioned above and below.

In summary, it is presently not possible to directly compare histological data and standard radiological data. It would be desirable to have a method for 3D reconstruction of histological data that would allow to directly compare histological and radiological data. The presently available methods for 3D reconstruction of histological data show disadvantages that limit their practical usefulness.

Plastination methods allow only to 3-dimensionally reconstruct blood vessels or structures that can be selectively stabilized. So far, no plastination methods exist that would stabilize regions expressing a certain molecular marker, or cells and tissues that have been stained selectively. Furthermore, plastination only provides 3D-visualization, but not a quantitative analysis.

Manual reconstruction methods are very time-consuming. To view a different plane of the section one would have to section the model itself.

Confocal scanning microscopy is limited to relatively small and transparent specimen (less than 2 mm thickness, usually less than 200 µm thickness). Some specimen, such as certain tumors, contain melanin and are not transparent. Other tissues such as cartilage have different refractory indices from the surrounding tissue which leads to artefacts and loss in resolution. Usually only fluorescently stained samples can be used.

Computer reconstruction methods can be used to reconstruct 3D data sets from histological sections. However, the presently known methods are limited in their use. They do not offer a free choice of the level, thickness, and direction of the virtual section. Only small samples that can be photographed in single images have been used for image registration. Photography at significantly lower magnification might be theoretically possible, but usually results in a loss of fluorescent signal and resolution. Also, only a single marker was used to stain each specimen.

The presently known 3D reconstruction methods for histological sections require that images of all histological sections of a given specimen are used in the registration and reconstruction. This requires time-consuming sectioning and requires that only one staining protocol is used for the entire set of sections. Thus, it is not possible to compare stainings of two different protocols side by side at the same level of a virtual section. In previous reconstructions only one marker was used with only one filter set of the microscope.

Although there has been a long-felt need to integrate histological and radiological data, previous attempts have been hampered by different data formats of each method. E.g., the level and direction of the histological sections was not in register with the corresponding plane of the radiological image. The region covered by histological images is typically much smaller than that covered by radiological methods. Also, unequal thickness of the respective sections (1-20 µm for typical histological sections, 1-2 mm for typical radiological sections) makes it difficult to compare single features of each section. In addition, the different data output formats (summed pixel images of histological sections versus parameter maps of radiological data) made it impossible to integrate histological and radiological data.

In fact, even the comparison of histological data as such has been notoriously difficult. For example, different levels, direction, and thickness of these sections can render a direct comparison of histological data gathered from different specimen almost impossible. Thus, tedious double-staining protocols have to be applied to directly compare the distribution of two different markers. It would be desirable to possess a method that would allow to compare the distribution of two different markers that were labeled using the same staining method.

Accordingly, it is an object of the present invention to provide an improved method for the 3D-reconstruction of histological image data and to overcome the drawbacks mentioned above. In particular, it is an object of the present invention to provide a method for the direct comparison of histological and radiological data.

In accordance with the object of the present invention, there is provided a method for 3D visualization and quantification of histological section data, including the following steps:

A) creating a radiological image of a specimen,

B) cutting said specimen or a specimen overlapping with said specimen into histological sections,

C) taking photographic images of said histological sections,

D) registration of the images according to step C) based on overall similarity in the horizontal plane (in the XY-plane),

E) creating a (virtual) stack of said registered images in the vertical direction (along the Z-axis),

F) creating a virtual section of the same thickness, level and direction as the section represented by the radiological image,

G) creating a 2-dimensional image of said virtual section created according to step F,

H) comparing the 2-dimensional image according to step G) with the radiological image created according to step A).

Also provided are methods to perform 3D-reconstruction of large specimen. Also provided are methods to integrate photography at high magnification with a motorized microscope stage and a motorized filter set of the microscope. Also provided are methods to base the reconstruction on only a subset of the original sections. Also provided are methods that enable the use of multiple staining methods in the 3D reconstruction. Also provided are methods to choose defined levels, thickness, and direction of the planes of the virtual sections. Also provided are methods that allow to directly compare histological data with data from radiological images. Also provided are data formats that allow to embed the method or parts of the method into 3D visualisation programs used for radiological data. Specifically, the invention provides a method to represent histological data in the format of a parameter map, which can be used for direct comparison with radiological parameter maps, also using quantitative methods.

In contrast to previous 3D reconstruction methods for histological sections, the present method contains several steps that provide significant work- and time-saving which translates into significant cost-saving and more rapid diagnosis in medical applications. These steps include the automatic or semi-automatic assembly of large composite images from smaller high-resolution images. These steps also include the omission of sections from 3D reconstruction and analysis. These steps are particularly relevant for an economical histological analysis of such large specimen as the ones that are usually subject of radiological analyis.

The present invention allows to directly compare histological and radiological data. The present invention provides the possibility to generate parameter maps of virtual sections generated from histological data. These parameter maps can then be used to directly compare histological and radiological data. The present invention fulfills a long-felt need of radiologists, who need a "gold standard" to verify and interpret their data. In particular, the direct comparison with histological data will allow to develop and interpret improved radiological methods.

As the present invention allows to omit histological sections from the 3D reconstruction, it is possible to use these sections for different analyses. For example, the distribution of different markers can be analyzed on such sections. It is even possible to generate separate 3D reconstructions of such separately analyzed markers, resulting in independent reconstructions for these markers. Furthermore, it is possible to integrate the data of these markers into one single 3D reconstruction and thus to directly compare multiple histological analyses with radiological data.

The present invention is further characterized by the accompanying drawings in which

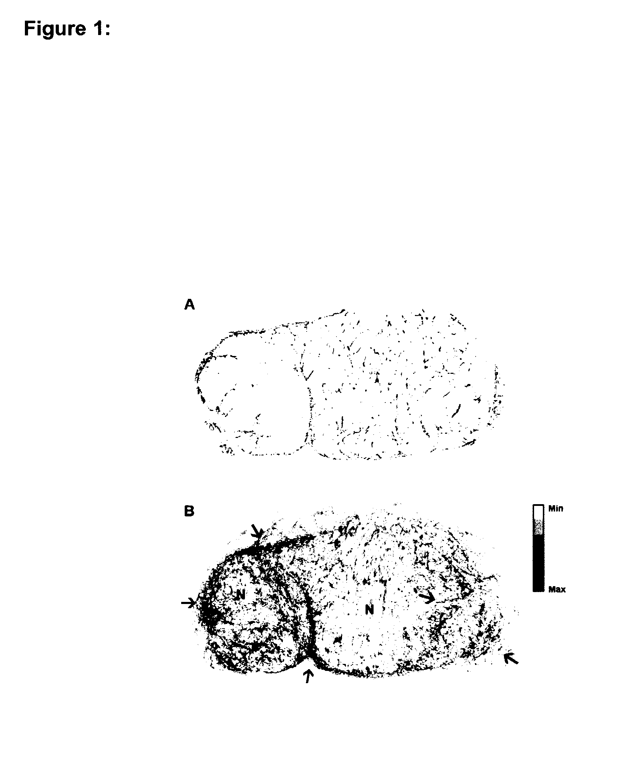

Fig. 1   represents a histological section of a HaCaT-ras tumor in a nude mouse stained with anti-CD-31 (A). A thick (1800 µm) virtual section of said tumor (B) is presented as a parameter map of vessel density in volumetric units clearly showing highly vascularized areas (arrows) and necrotic areas (N). The virtual section is in the same plane as the origanal histological section (XY-plane),

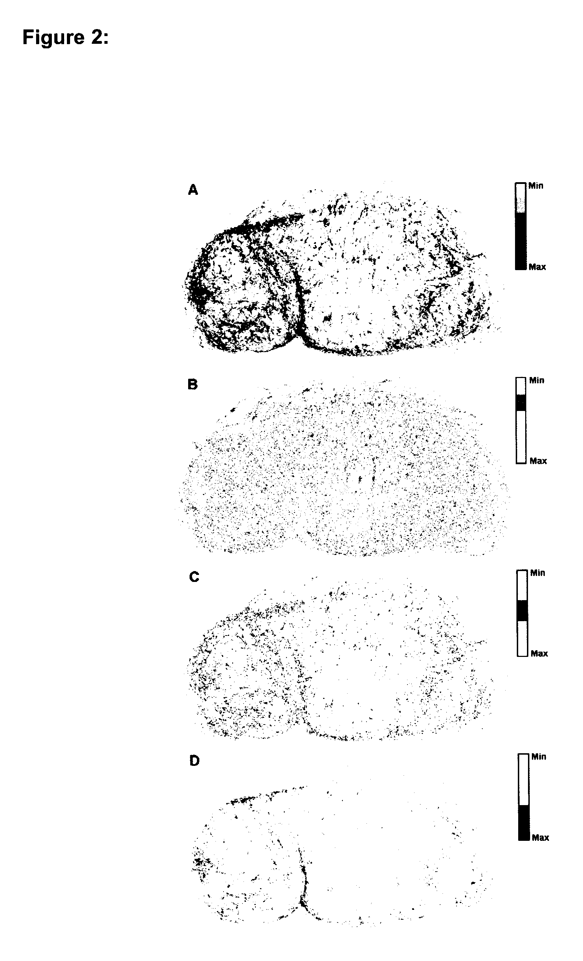

Fig. 2   represents the histological parameter map of Fig. 1 broken down according to vessel density. Showing low (A), medium (B), and highly (C) vascularized areas,

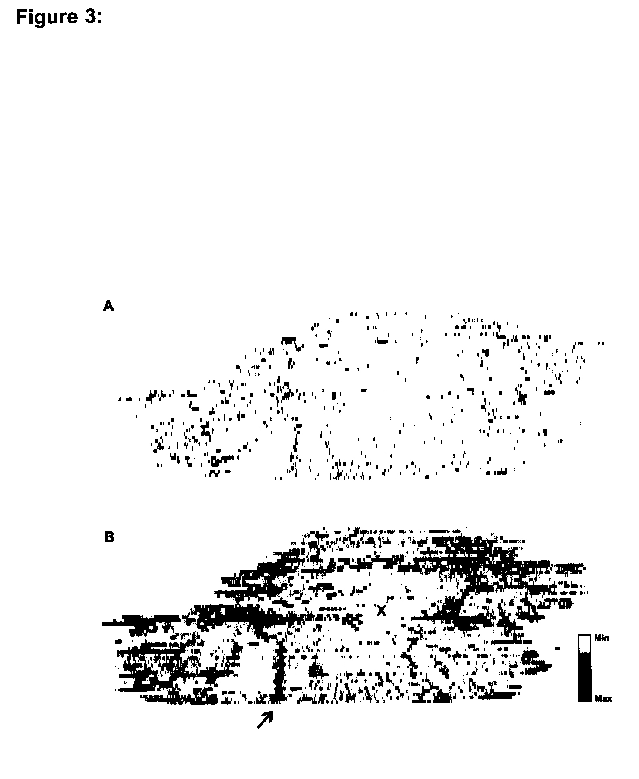

Fig. 3   represents a reconstruction of the histological sections of the HaCaT-ras tumor shown in Fig. 1 orthogonally to the original sectioning plane. Thick virtual section (1500 µm) reconstruction in the same plane (B) presented as a parameter map of vessel density in volumetric units clearly showing a vascular tree (arrow) through the tumor and necrotic areas (X). Note that the spatial resolution of this reconstruction is not uniform, but higher from left to right than from bottom to top. However, the spatial resolution in any direction is sufficient for a meaningful comparison with most radiological images,

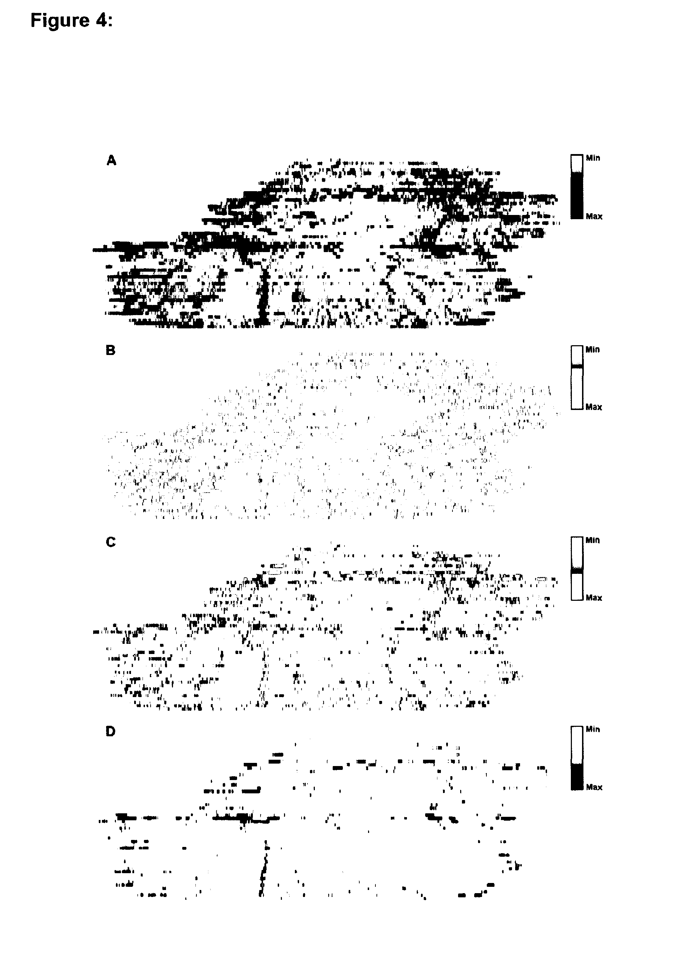

Fig. 4   represents the orthogonal histological parameter map of Fig. 3 broken down according to vessel density, showing low (A), medium (B), and highly (C) vascularized areas,

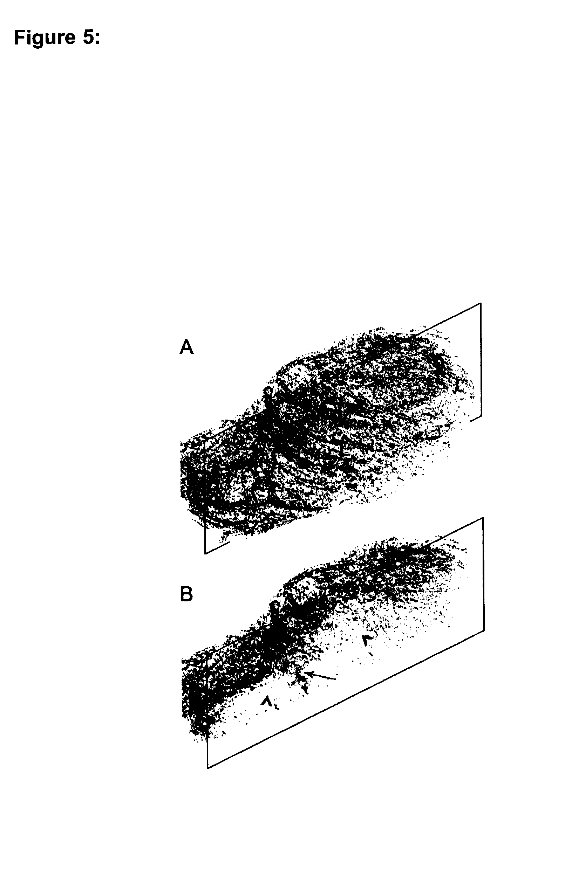

Fig. 5   represents a 3-dimensional view of vessels in the tumor of Fig. 4. The images are reconstructed from 75 single slices (A). A virtual section can be chosen at defined level and direction (designated by the black frame). View onto the tumor, virtually cut open along the plane of the virtual section (B). Necrotic zones (arrow heads) and a large vascular tree (arrow) can clearly be recognized inside the tumor (B),

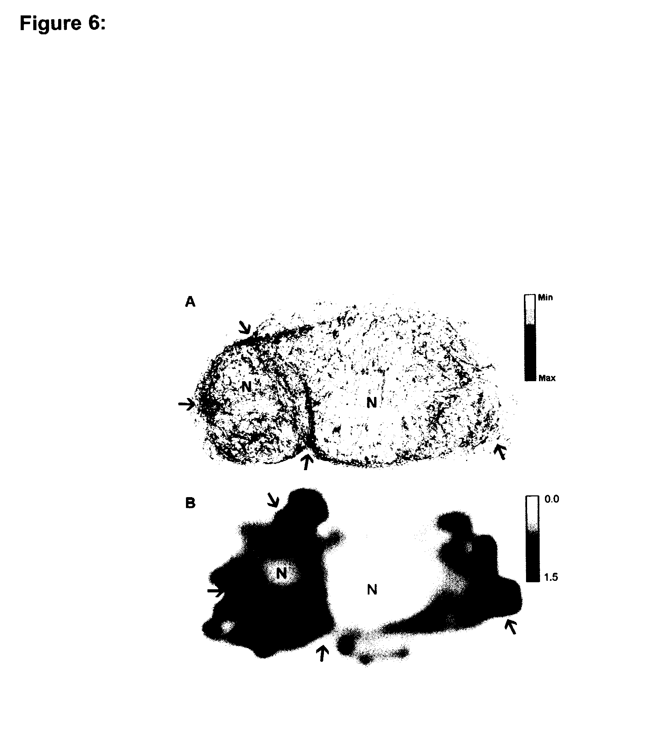

Fig. 6    represents a comparison of a histological parameter map (immunofluorescence, labeled with CD-31, thick virtual section (1800μm)) (A) with an MR blood flow parameter map (B) showing the amplitude of a dynamic contrast enhanced T1 weighted spin echo sequence (slice thickness 2 mm). A good correlation can be seen between blood flow and vascularization in highly vascularized areas (arrows) as well as necrotic areas (N),

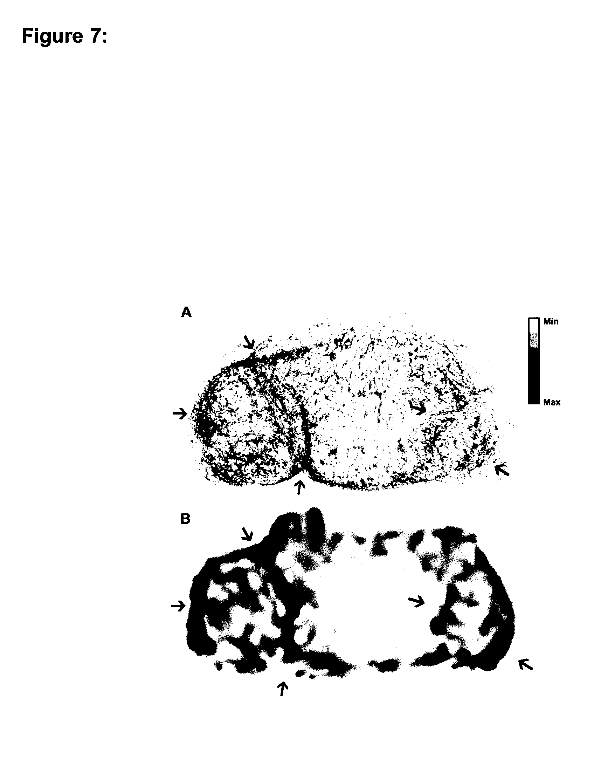

Fig. 7    represents a comparison of a histological parameter map (vessel density in volumetric units) (A) with an MR contrast enhanced micro-angiography (B). A good correlation between areas of high vessel density (arrows) on both maps can be seen.

The invention relates to a method for 3D reconstruction, visualization and quantification of histological section data. In summary, it includes the steps mentioned above.

In a preferred embodiment, structures on the histological sections are stained. Different methods are known which can all be used to stain structures present on histological sections. E.g., genetic methods can be used to introduce reporter constructs into an animal organism or target tissue. Typical reporter constructs include a cell-type specific promoter linked to the gene coding for a reporter protein. Typical reporter proteins include enzymes such as β-galactosidase or fluorescent proteins such as green fluorescent protein (GFP), its derivatives (e.g. EGFP, CFP, YFP), and red fluorescent protein (RFP). Non-genetic labeling methods include the introduction of tracer molecules, e.g. of radioactive tracer molecules or fluorescent tracer molecules.

Several staining methods can be used on histological sections themselves. Classical histochemical methods include hematoxyline and eosin stainings. Other staining procedures take advantage of the expression of endogenous enzymes such as cytochrome oxidase, which can be used to demonstrate neuronal activity in the visual cortex. Furthermore, immunohistochemical methods can be used for staining. Typically, a section is incubated with a primary antibody, which is directed against a target epitope. The target epitope can be either a known or an unknown antigen. The antibody can be monoclonal or polyclonal. The antibody can also be produced by recombinant methods. It is also possible to use a mixture of antibodies. The primary antibody can already be covalently linked to a detection moiety. Typically however, incubation with a primary antibody is followed by incubation with a secondary antibody. This secondary antibody is covered covalently to a detection moiety. The detection moiety can be either a fluorescent dye, a non-fluorescent marker or an enzyme. Typical fluorescent dyes in this sense are Cy5, Texas Red, Alexa 568, Cy 3, and Fluorescein. A typical non-fluorescent marker is biotin. Typical enzymes are hydrogen peroxidase and alkaline phosphotase. The presence of these enzymes can then be demonstrated using suitable substrates, such as di-aminobenzidine (DAB) or NBT/BCIP (4-nitro blue tetrazolium chloride and 5-bromo-4-chloro-3-indolyl-phosphate, available as ready-made stock solution from Roche Diagnostics). Preferred detection moieties are fluorescent dyes. Other staining methods include RNA in situ hybridization or in situ polymerase chain reaction. Preferred staining methods are those that result in a linear relationship between the amount of target molecule and the output signal.

The choice of the primary antibody depends on the research objective. In the case of angiogenesis, antibodies can be directed against blood vessels or blood vessel precursor cells. Preferred primary antibodies are directed against blood vessels, including e.g. antibodies directed against CD-31, von Willebrand Factor, Factor VIII and VE-cadherin. Other preferred applications are the detection of apoptosis (e.g. antibody against annexin 5). proliferating tissue or single cells such as progenitor cells, inflammation-, and tumor cells. CD-34 is a molecule present on adult progenitor cells and can be used as a marker for these cells, although not being entirely specific for adult progenitor cells.

Additional labeling methods include the use of fluorescent stains. For example, cell nuclei can be labelled with DAPI (4',6-diamidino-2-phenylindole dihydrochloride), Hoechst 33342 or Hoechst 33258. Neuronal fiber tracts can be labelled using carbocyanine dyes such as DiI (1,1'-dioctadecyl-3,3,3',3'-tetramethylindodicarbocanine perchlorate) or DiO (3,3'-dioctadecyloxacarbocyanine perchlorate) or DiD (1,1'-dioctadecyl-3,3,3',3'-tetramethylindodicarbocyanine perchlorate).

Exhaustive lists of available fluorescent stains are widely known and have been published e.g. in the catalogue of Molecular Probes (Eugene, Oregon). Importantly, more than one marker can be used on a single section, provided that the signals of the markers (e.g. the fluorescence spectra) can be separated.

The disclosed methods can be used to analyze different specimen. As used herein, specimen include any biological or non-biological sample that can be mechanically sectioned and analyzed by microscopical methods. Preferably, the specimen is large (1 mm-60 cm length of the longest axis of the given section, preferably 3 mm-50 cm diameter, more preferably 1 cm-40 cm, more preferably 2 cm-30 cm, most preferably 3 cm-20 cm).

Non-biological specimen include any specimen that can be analyzed using radiological methods and that can be mechanically sectioned into sections comparable to histological sections of biological specimen. These sections of non-biological specimen are herein referred to as histological sections as well. Histological analysis can be used e.g. as a gold standard to verify the measurements of radiological methods. For example, polymers or composite materials can be analyzed using ultrasound or infrared imaging. Preferred are composite materials. More preferred are composite materials that contain material of biological origin such as wood or plant fibers. The present method can be used to analyze and quantify the distribution of the different components within such composite materials.

Biological specimen include the whole or parts of organisms, organs, tissues, and cells. The organisms can be plants or animals. Organs, tissues, and cells can be derived directly from an organism or they can be grown in organ, tissue or cell culture. The specimen of interest can be embedded or included in other tissues. E.g. a specimen derived from an organ or a neoplastic tumor can be embedded in surrounding tissue. Preferably, the biological specimen is pathologically altered. More preferably, the pathologically altered biological specimen is subjected to comparative analysis with a non-altered control specimen. Preferably, the biological specimen is derived from a tumor, the central nervous system, liver, kidney, thymus, lymph nodes, muscle or spleen. More preferably, the biological specimen is derived from a neoplastic tumor, the central nervous system, the liver or kidney. More preferably, the biological specimen is derived from a neoplastic tumor or the central nervous system. Most preferred, the biological specimen is derived from a neoplastic tumor.

Tumor, as used herein is a localized increase of tissue volume, e.g. caused by inflammation or by new formation of tissue (neoplastic tumor). Preferably, the tumor is neoplastic.

The invention will be of great use in studying and monitoring the development of neoplastic tumors. Upon reaching a certain size, neoplastic tumors trigger the vascularization of the tumor. Parts of a neoplastic tumor that are insufficiently vascularized become necrotic (see Fig. 1 and Fig. 2). Current investigations aim to limit ingrowth of blood vessels into tumors in general (anti-angiogenic therapy) thereby aiming to enlarge the necrotic zone and thus to limit tumor growth. Vascularization can be measured indirectly using radiological methods such magnetic resonance micro-angiography or blood flow measurement by magnetic resonance imaging.

A measure of vascularization of a tumor is microvessel density. Current analyses of microvessel density rely on counts on single sections or parts of single sections. However, as shown in Fig. 1 and Fig. 2, the distribution of microvessels within a new plastic tumor is non-uniform, having a high density in the periphery and near large vessel arbors, and having a low density in the center of the tumor. Measures of microvessel density should therefore be performed on 3D reconstructions of the neoplastic tumor, so that the measurement can be performed on representative regions. Alternatively to microvessel density, the distribution of microvessels as such can be analyzed using the provided method.

Using the provided method it is also possible to analyze the distribution of specific cell types, e.g. inflammatory-, fibroblast-, and adult progenitor cells in a neoplastic tumor. Adult progenitor cells are currently suspected to play a major role in carcinogenesis. Furthermore, also necrotic and apoptotic as well as proliferating tissue areas may be visualized and quantified.

Different methods are known to prepare histological sections. All known methods are applicable in the context of the present invention. Preparation of histological sections typically comprises the following steps: preparation, fixing, embedding, and sectioning.

The specimen can be fixed either before or after preparation. For example, an organism can be anaesthetized and then be perfused with a suitable fixative before the specimen is prepared from the organism. The prepared specimen can then be further fixed in a suitable fixative. In other cases, it is advantageous to isolate the specimen from the organism first and then to fix it in a suitable fixative. It is also possible to fix the entire organism, for example by perfusion, and then to section it in its entirety. Typical fixatives include formaldehyde or glutaraldehyde as active ingredients. The fluorescence of GFP and its derivatives is left mostly intact after fixing with formaldehyde. Another fixing method is cryofixation, a procedure during which the specimen is rapidly frozen, e.g. on dry ice or in liquid nitrogen. Before cryofixation, the specimen can already be embedded in an embedding medium.

Different embedding and sectioning methods are generally known and applicable in the context of the present invention. They include the following methods. Fresh or fixed tissue can be sectioned on a vibratome. The vibratome moves a vibrating sectioning blade through the specimen. The thickness of vibratome sections is usually in the range of 15-400 µm, preferably 15-200 µm, more preferably 20-100 µm. Fresh or fixed frozen tissue can be sectioned on a cryostat. For cryostat sectioning the tissue is typically equilibrated over night in an appropriate medium containing 30 % sucrose, embedded in a fluid embedding medium such as OCT Tissue Tek, and frozen on dry ice or, preferably, liquid nitrogen. Cryostat sections are easy to stain, as most messenger RNAs and antibody epitopes are left intact. Also GFP and its derivatives survive cryostat sectioning. The thickness of cryostat sections is usually in the range of 3-50 µm, preferably 3-40 µm, more preferably 5-10 µm. An alternative sectioning method employs paraffin embedded material. The dehydrated specimen is embedded in warm and liquid paraffin, which hardens upon cooling to room temperature. Sections are then prepared on a conventional microtome. The thickness of paraffin sections is usually in the range of 3-40 µm, preferably 4-30 µm, more preferably 4-20 µm, most preferably 5-15 µm. Another method is to embed the specimen in a synthetic resin, such as epoxy resin, and then to section it on a microtome. The preferred thickness of epoxy resin sections is in the range of 0.5-10 µm, preferably 1-8 µm, more preferably 1-4 µm. Which sectioning method is chosen depends on the actual application. For example, vibratome sectioning and cryostat sectioning are rapid sectioning methods, but do not allow to prepare very thin sections.

Generally preferred are methods that cause few sectioning artefacts and still allow easy staining. Sectioning artefacts can include e.g. distortion of the section by the sectioning blade or ruptures in the tissue. In general, the preferred conditions are fulfilled by paraffin sections, which also leave many antibody epitopes intact. Based on the actual specimen and the marker in question, it is possible to choose the most suitable sectioning method.

Within the scope of the invention, many different methods can be used for the microscopical acquisition of histological data. Microscopes can be either in an upright or inverted configuration. In an upright microscope, the lenses are mounted above the stage that holds the sample. In an inverted microscope, the lens is mounted below the stage containing the sample. Both configurations can be used to practice the present invention.

In a standard light microscope the sample is illuminated by a light source which is mounted below the sample (in an upright microscope) or above the sample (inverted microscope). The transmitted light is absorbed differently by the stained and non-stained parts of the image. Phase contrast and differential interference contrast (also known as Normarski Optics) can be used to visualize structures with similar absorption but different refractory indices, such as non-stained biological structures.

The light source can also be mounted on the side of the sample at a low angle. It thus yields a dark field illuminated image which is preferred for the analysis e.g. of silver grains which are developed by autoradiographic staining methods.

Autoradiography is a technique in which a radioactive object produces an image of itself on a photographic emulsion. E.g. a radioactively labeled marker can be used on a histological section. The section can be covered with a photographic emulsion and, after sufficient exposure, it can be developed similarly to photographic film, thus reflecting the distribution of the marker.

For the analysis of fluorescent labels, the microscope should ideally be equipped with a light source that excites the fluorophore. The light source can be mounted outside of the microscope, illuminating the sample from roughly the side or the lens. Preferably, the light source is mounted to the microscope and illuminates the sample through the lens. In this case, a beam splitter is inserted in the light pass. The beam splitter separate the shorter-wavelength excitation light beam from the longer-wavelength emitted light, which is directed to the camera or the observer. Most commercially available microscopes provide the possibility to manually or automatically shift the filter sets of the beam splitter. Thus, it is possible to analyze different fluorescent markers on the same section and to compare their distribution. To practice the invention, it is preferred to photograph images of the different fluorescent markers separately and to integrate the images in a single colour or greyscale coded image.

Another possibility to take microscopic images is to use a confocal scanning microscope (CSM). In a typical CSM a laser beam is focused precisely on the point of focus of the microscope lens. A pin hole in the detection system provides that only light is analyzed that originates from the point of focus of the laser beam. Thus, only very little scattered light is registered which in a traditional microscope would decrease the contrast of the image. By scanning the laser in register with the pin hole over the sample, an image of the entire specimen can be generated. The scanning is usually done by deflecting the laser beam with an oscillating mirror in such a way that the illuminating spotlight and the confocal pinhole at the detector remain strictly in register. CSMs are preferred if high contrast images of fluorescent labels in relatively thick sections (10 $\mu$m-2 mm, preferably 15 $\mu$m-200 $\mu$m, more preferably 20 $\mu$m-100 $\mu$m thickness) or undulated sections are required. A further improved variant of the CSM is the two-photon CSM which combines a lower level of laser irradiation of the sample with improved contrast and resolution.

Photographic images of histological sections are required for practicing the invention. It is possible to take images on a light-sensitive film and to subsequently scan and digitize the images.

A preferred method is to use a digital camera, such as a CCD camera or a cooled CCD camera. Suitable cameras for microscopical applications are widely available and are also supplied by microscope manufacturers. In the case of fluorescently stained specimen, the camera should be sufficiently sensitive. A suitable camera is the Soft Imaging System ColorView XS. Other suitable cameras include cameras of the Hamamatsu Orca series and the Diagnostic Instruments SPOT series.

Image data can be stored in different file formats. Typically, image files contain up to three parts: one part is a header with a fixed length which contains the minimal information for interpretation of pixel values. The next part is the body of pixel values, a one- or multidimensional array, and finally an optional part of tags which add information about the image. Common image data formats include PIC (Schröter A, Engelmann U. ipPic Library. A portable library for the PIC image file format. Technical Report 75, DKFZ 1995), Analyze, Matlab, PovRay density (DF3), IMOD, VTK, ITK, VOL (3D ultrasound), DICOM, DICOM 3, MIPS 3.0, NIH image stacks, Multi-TIFF, IDL, Khoros, ILab4.

In a preferred embodiment, the file also contains information about the specimen, such as patient information which is used in a PACS (Picture Archiving and Communication System), information on the applied staining methods, or information on a previous experimental or therapeutical treatment of the specimen. For example, DICOM 3 has been designed as a standard to include such additional information. Preferably, the positions of the image tiles in an assembled 2D image are stored in the header or tag of the file. More preferably, the distance of the images in a stack and the position of image files in an assembled 2D-image are stored in the header or tag of the file. The most preferred image data format is the PIC image file format (see above), which can include up to 8 dimensions of image information.

Different image acquisition methods are possible depending on the particular specimen. Histological sections of small specimen can be photographed in a single image per section. Images of histological sections of larger specimen could theoretically be taken at low magnification. However, the resolution of such images is limited, obliterating an important advantage of histological sections. E.g., the extent of small blood vessels, such as microvessels in a tumor, could not be measured reliably anymore. Due to the low contrast of images taken at low magnification, frequently contrast enhancement techniques have to be applied to generate satisfying images. In addition, at low magnification the fluorescent signals is frequently too weak to be imaged satisfactorily.

How low magnification can be chosen strongly depends on the particular application, the specimen and the staining protocol. The person skilled in the art is able to determine an appropriate magnification. Thus, the following data is intended to serve only as a rough guideline. Groups of cells may still be followed at 10x magnification, whereas single cells require approximately 60-100x magnification. In the case of fluorescently labeled microvessels 20-40x may be sufficient, but it is preferred to reach 60-120x magnification.

According to the present invention, it has been found that large sections can be photographed in a tiled pattern at high magnification and assembled into one large high-resolution image. It has been found that the tiling and assembly does not interfere with the subsequent registration procedure. The finding was not anticipated, as microscopical images frequently show artefacts such as distortion at the edges and non-uniform brightness. These artefacts cause significant discontinuities to appear at the edges of the tiles of the assembled image. It was possible that the image registration algorithm would register the images along the edges of the tiles (partial images) rather than according to the best fit of the sections themselves. However, registration was not affected by the discontinuities. In addition, it was found that residual registration errors could be limited by manual pre-registration or by tiling the images in irregular patterns. In those irregular patterns, the edges of tiles in juxtaposed layers are in non-related positions. Thus, the invention relates to 3D reconstruction of 2D histological data, in which images of specimen, preferably large specimen, are assembled from a plurality of partial images of the specimen.

According to the invention, different markers can be used which label structures or gene or protein expression on the histological sections. It was found that it is possible to use more than one marker on a single section for 3D reconstruction. For example, two different fluorescent markers can be used, if their absorption or emission spectra are sufficiently distinct. For example, Cy5, Texas Red, and Rhodamin can be visualized separately of Fluorescein.

Using the appropriate filter set, it is possible to take separate pictures of each signal. Thus, the 3D distribution of more than one marker can be reconstructed. Reconstructions can be performed in separate 3D image stacks, but they can also be performed within one stack, using different colors or grey values for each marker. Preferably, two different staining methods alternating on the consecutive images of a single stack

In particular, non-fluorescent markers can be combined with fluorescent markers. E.g., a non-fluorescent mRNA in situ hybridization signal can be photographed at bright field illumination and it can be fused with the image of a fluorescent marker taken under appropriate conditions.

To practice the invention, a manually operated microscope is sufficient. However, it is preferred that the camera can be operated from the computer, as it is the case for most digital cameras. E.g. many cameras can be operated via a IEEE-1394 (FireWire™ ) interface. It is preferred to use a microscope that features a motorized stage and/or a motorized filter set. Such microscopes are commercially available. A motorized stage or filter set can be operated by a suitable driver software or via hardware interfaces. Such software includes e.g. the Leica DM SDK Software Development Kit for Leica automated microscopes. The DM SDK also provides a C library to control the microscope in a hardware independent manner.

Many motorized stages or filter sets are equipped with a RS-232 Port which allows to control the devices via a serial port. The Ludl motorized stages, which are also available for Olympus microscopes, can be controlled via the Ludl MAC 5000 controller system, which can be connected via a RS-232 or USB port. The Prior Scientific ProScan motorized stages can be controlled via the ProScan Advanced Controller, whose command set can be accessed via a serial port.

Thus, the partial images of the histological section of a large specimen can be taken automatically in a tiled pattern. For example, it can be sufficient if the user provides only the coordinates of the upper left hand image tile and the lower right hand image tile. The software then determines the position of all images to be taken, depending on the magnification of the lens that is being used. To improve the later registration of the tiled images, the software could determine image positions in an irregular pattern. Preferably, the x and y coordinates of each image are saved along with the image. Preferably, the coordinates are included in the header of the image file.

Another important advantage of a motorized microscope is that the region of the section to be photographed can be chosen at low magnification whereas the pictures themselves are taken automatically at higher magnification. This provides another saving of time and effort.

Similarly, a motorized filter set and illumination system can be used to automatically photograph images of different markers. For example, camera and microscope can be programmed to first take an image at bright field illumination and subsequently to change to fluorescent illumination and the appropriate filter set to image the distribution of a first fluorescently labeled marker, (e.g. Cy5, Texas Red, or Rhodamin), and then change to a different filter set to take an image of the distribution of a second fluorescently labeled marker (e.g. Fluorescein).

Thus, in a preferred embodiment, the invention relates to a method to provide a 3D reconstruction of 2D histological data in which the image acquisition software is integrated with the operation of the microscope.

The single images of a histological section can be assembled in the 2D plane using different image assembly (mosaicing) algorithms. An example for such an assembly algorithm is the Multiple Image Alignment Algorithm of the AnalySIS Software by Soft Imaging Systems. In general, various methods for image assembly are known and can be broadly classified into direct methods and feature based methods. Direct methods are found to be useful for mosaicing large overlapping regions, small translations and rotations. Feature based methods can usually handle small overlapping regions and in general tend to be more accurate but computationally intensive. Preferred in the scope of the invention are feature based methods.

The assembly of the single images can be facilitated, if the relative x- and y-coordinates of each image are saved during photography. For example, if a motorized microscope stage is being used, the x- and y-coordinates of the stage position as determined by the program operating the stage, can be saved along with each image.

For 3D reconstruction the images of the histological sections have to be registered (aligned) so that corresponding parts of the specimen are in corresponding image positions. The images can be registered either manually or automatically. For automated image registration several registration algorithms are known. Preferred are registration algorithms which can also correct distortions of the sections. Several registration program is the Automated Image Registration (AIR) package (Woods RP, Grafton ST, Holmes CJ, Cherry SR, Mazziotta JC. Automated Image Registration: I. General Methods and Intrasubject, Intramodality Validation. Journal of Computer-Assisted Tomography 1998; 22: 139-152.), which is included in the software MEDx 3.4.1 (Sensor Systems). The AIR "2D affine 6 parameter" model also corrects distortions of the sections.

The registration techniques can be divided in extrinsic methods, intrinsic methods and non-image based methods. All these techniques result in an alignment in which overall similarity of the images in corresponding positions is maximized.

The extrinsic methods are based on foreign objects which are introduced into the imaged space. The objects are designed to be well visible and accurately detectable in all of the pertinent modalities. For example, before sectioning, a needle with a fluorescent marker can be driven through the specimen, leaving a trail of fluorescent dye in corresponding positions of the later histological sections.

The intrinsic ones rely on generated image content only. Registration can be based on a limited set of identified salient points (landmarks), on the alignment of segmented binary structures (segmentation based), most commonly object surfaces, or directly on measures computed from the image grey values (voxel property based).

Non-image based registration makes use of several coordinate systems that can be calibrated to each other, for example the coordinate systems of the camera and the specimen.

It is also possible to manually pre-register the images to reduce the computing effort in the registration procedure.

Previous 3D-reconstruction methods have relied on the registration of images of all sections of a particular specimen. However, it was found that a large number of images of histological sections can be omitted from the registration procedure without negatively affecting registration (Fig. 3, Fig. 5). Accordingly, the remaining images could be registered, although the features of such images are less corresponding to each other than the features of images of juxtaposed histological sections. Thus, the possibility is provided to use only a subset of the original sections for 3D-reconstruction. How many sections can be left out depends on the particular application, specimen, and staining protocol. In general, the sampling frequency should be at least two times of the natural frequency, i.e. a single object of interest (e.g. a labeled cell, cell group or blood vessel) should be present in no less than two sections of the stack. E. g., if a cell group has been cut into 10 consecutive sections, then up to eight of these sections could be omitted. In practical experience, the sampling frequency should be higher to allow a faithful representation, i.e. each object of interest should be represented in about five sections.

However, depending on the research objective, it may not only be tolerable but also preferable to use far less sections. E.g., it may not be necessary to achieve an optimal resolution along the Z-axis. Indeed, it will often be sufficient to have a non-uniform spatial resolution, e.g. the resolution being lower along the Z-axis than in the XY-plane (see also Fig. 3) Thus, it would be possible to analyze the fine structure in the XY-plane while at the same time economically achieving an overall 3D-reconstruction in all directions. This is especially preferable if the resolution of the corresponding radiological data is still lower than that of the histological reconstruction in any direction.

In summary, omitting sections allows to perform 3D reconstruction much more rapidly, as sectioning and photography of histological sections constitute very time-consuming steps. Additionally, omitting sections allows to section and reconstruct large specimen more rapidly. An additional advantage is that omitted sections can be used for different diagnostic methods. Furthermore, omitted sections can be stained according to different methods and used for different reconstructions. Thus, it is possible to analyze several markers in one specimen, even with the same staining method or label, and to reconstruct their 3D distribution. If such images are colour-coded, or coded with different grey values, the 3D distribution of the respective markers can be visualized within a single 3D reconstruction. Especially in the latter case it is preferable to include positional markers in the specimen before sectioning. Such a positional marker can for example be a needle path leaving a fluorescent or non-fluorescent marker trail in the specimen before sectioning.

For 3D reconstruction, the single layers are arranged into a 3D image stack in which the thickness of the histological sections is taken into account. In addition, the distance between the sections is taken into account if some sections of the specimen have been omitted. The resulting virtual image stack consists of images spaced at defined distances. It is known how such image stacks can be generated. E.g., such a 3D image stack can be generated using the software libraries ipPic and ipFunc (Schröter A, Engelmann U. ipPic Library. A portable library for the PIC image file format. Technical Report 75, DKFZ 1995). Additional software libraries providing appropriate tools are Analyze, Mathlab, VTK, ITK, IDL, Khoros and ILab4. Preferably, the thickness of each section and the distances between the sections are saved in the header of the file of the 3D image stack.

The layers of a single stack can be made up images of histological sections that were stained by different methods. Preferably, two different staining methods are using alternating on the consecutive images along the Z-axis. In this context, not staining a histological section is also considered as a staining method.

The 3D image stack can be used either directly for the subsequent analysis, or the images can be thresholded. Thresholding of the images is performed by defining a threshold pixel value which falls between the majority of those pixel values representing background and the majority of those pixel values representing signal. For thresholding, the pixels haveing a vallue below the threshold pixel value are assigned the same pixel value, e.g. the value 0. All pixel values above the threshold value are assigned another pixel value, e.g. 255.

Many further algorithms for image and contrast enhancement are known, which can all be applied to single images or the images forming the 3D image stack. Examples for such methods include normalization (linear, logarithmic, and exponential), Laplace-operator, Sobel-operator, median, Gauss filter, noise suppression, and histogram equalization, e.g. uniform non-adaptive histogram equalization (UNAHE). However, it should be kept in mind that image and contrast enhancement may negatively affect a later quantitative analyis of the biological data contained in the images.

Regions of interest (ROIs) limit image processing to only a part of the image or the image stack. ROIs can be chosen in single 2D images or in image stacks. Essentially, in 2D images, a region is chosen to which the further processing is confined. However, the region can also be selectively excluded from further processing. The region can be shaped regularly or irregularly, e.g. it can be defined as a rectangular or ellipsoid region, but also as a polygonal or freehand region. All pixels included in the ROI form a separate array to which further processing limited (or which is included from processing). Thus, ROIs can save computing power, but they can also be used to selectively change or adjust the pixel values ROI. The process described above can be applied analogously to 3D images, resulting in a volume of interest (VOI). The VOI can be chosen by clipping objects such as spheres, planes, cubes and freehand 3D shapes.

The 3D image data can be visualized using different methods. These methods include, but are not limited to, 3D views (e.g., volume rendering and surface rendering), 2D views of sections whose level, thickness, and direction can be chosen freely, and particularly output in a parameter map that is compatible with parameter maps of radiological images.

Several methods can be used for volume rendering of the image stack or a region of interest chosen from the image stack. These methods include, but are not limited to, splatting, maximum intensity projection (MIP), texture rendering, and ray-tracing.

Splatting is a volume-rendering technique in which the information at each voxel is back-projected onto the screen. It differs from other volume rendering algorithms in that it does not need to interpolate data between voxels at run time. This is because it uses a pre-integrated kernel at each voxel that shifts the interpolation to a pre-processing task. At run time, this pre-integrated kernel gets displayed as a 2D image centered at each voxel location. With modem graphics hardware this amounts to a single texture mapped polygon per voxel. The major difference to ray tracing is that the pixels are not created by following the traces, but by direct projection of the voxels onto the image plane. Thus, a trilinear interpolation of the voxels is not necessary.

Maximum Intensity Projection (MIP) provides a planar projection of the image data. The value of each output pixel is determined as the value of the most intensive pixel in the image stack along the line of the projection from the output pixel. However, the method provides no real 3D visualization.

Texture Rendering is a method for 3D volume rendering. Texture Rendering can be enhanced by accessing certain graphics hardware (e.g. SGI Octane and SGI 02), but it can also be software-implemented using algorithms such as the Shear-Warp-Algorithm. Texture Rendering is limited to a maximum of one light source and it is not very sensitive to details.

Preferred methods for volume rendering are ray-tracing methods, such as implemented by the Heidelberg Ray-Tracing Model (Meinzer HP, Meetz K, Scheppelmann D, Engelmann U, Baur H. The Heidelberg Raytracing Model. IEEE Computer Graphics & Applications 1991; 11(6): 34-43). In ray-tracing methods, more than one light source can be used. The Heidelberg Ray-Tracing Model uses two light sources, one of which is located behind the observer and another one which is shifted by 45 degrees in relation to the viewpoint of the observer. These two light sources have the advantage that the second light source causes shadows to be cast within the image. These shadows improve the visualization of fine structures such as blood vessels within the reconstruction of a tumor. Ray-tracing models also allow a representation with a true perspective, in which objects closer to the observer appear larger than objects that are further away from the observer.

Surface rendering is another visualization method applicable within the scope of the present invention. Surface rendering is a method that visualizes the interfaces of objectes to the background. An advantage in comparison to volume rendering is the smaller data volume that has to be processed. The smaller data volume allows to interactively view the objects. Disadvantage is that certain information, e.g. about the interior of the objects, is discarded.

The present invention allows to generate 2D virtual sections through the 3D image stack or a defined region of interest. The level, thickness, and direction of these virtual sections can be chosen freely. For example, the Slicer Plugins of the teleradiologic workstation CHILI (Engelmann U, Schröter A, Schwab M, Eisenmann U, Vetter M, Quiles J, Bahner ML, Meinzer HP. Radiologieworkstation CHILI. In Jäckel A (Ed.) Telemedizinführer Deutschland, Ausgabe 2000. Bad Nauheim: Deutsches Medizin-Forum 1999: 271-276) can be used to generate such sections. The sampling of the section is based on scan conversion algorithms (or graphics raster algorithms) for graphics primitives like lines and polygons, including derivations for 3-D processing (e.g. Daniel Cohen: "Voxel Traversal along a 3D Line", Paul S. Heckbert (ed.), Graphics Gems IV, Academic Press, 1994, pp. 366-369).

Images or parameter maps can be compared by showing the images or parameter maps side by side. In many cases, it is preferable to compare the images more directly. E.g. the images can be registered as two layers of a single image, thus creating an overlay of one image onto the other. This registration can be done manually or, if enough corresponding features are contained in the image, automatically using an image registration algorithm. Such registered images can be subjected to any calculation considered advantagous by the person skilled in the art. E.g., identities and differences between the images or parameter maps can be highlighted by creating a new image in which the pixel values are the result of subtracting the pixel values of one image from the pixel values of the second image. Thus, the present invention also relates to a method for direct comparison of radiological and histological data in which an image is created by subtraction or addition of the pixel values in corresponding positions of the images generated from radiological data and histological data.

To compare histological and radiological data, it is necessary to provide the data in comparable formats. For example, the level, thickness, and direction of the virtual sections of both methods have to be in register. In addition, the data output format has to be similar. As described above, the methods provided by the invention allow to generate two-dimensional virtual sections of defined level, thickness, and direction of the section. Preferably, the level, thickness, and direction of such sections is the same as the thickness of the corresponding radiological computed section. "The same" in this context means that there should be a substantial overlap between both sections. A substantial overlap means that the volume represented by the virtual histological section and the volume represented by the radiological section overlap to at least 25%, preferably at least 50%, more preferably at least 75% and most preferred at least 90%. The same thickness refers to a thickness of the virtual section of between 50% and 200%, preferably between 67% and 150% and more preferably 91-110% of said radiological section. Furthermore, the region of the specimen covered by the reconstruction should be similar.

A typical presentation of radiological data, preferably dynamic and functional radiological data, is the parameter map. A parameter map is an image representing the distribution of parameters calculated from a virtual section of defined level, thickness, and direction. Typically, parameter maps are generated for radiological data. The present invention provides a method to generate a parameter map also for histological data. Preferably, the level, thickness, and direction of this virtual section correspond to the resolution or thickness of the corresponding radiological image or parameter map. In a parameter map, a colour or greyscale code is used to represent the local parameter value at a given point of the image. The encoding by colours or grey values can be linear or non-linear. Thus, the parameter map is a 2D representation of information contained in the volume of the virtual section (Fig. 2C and Fig. 3). For example, the parameter map can represent the local microvessel density in volume percent at each point of the virtual section. To calculate the parameter map, the pixel values of the virtual sections are mapped in orthogonal direction using an appropriate transfer function. Preferably, the computed output parameter is computed as the average of the pixel values at the corresponding position in the stack.

As used herein, radiological methods refers to all methods that visualize internal features of a specimen by essentially non-invasive methods. Essentially non-invasive means that the specimen is no dissected or sectioned to generate the image. However, non-invasive methods may include the application e.g. of contrast-enhancing agents, the introduction of a probe, and especially the introduction of a probe to take a sample of the specimen. Preferably, non-invasive methods may include the introduction of a probe to take a sample of a specimen for a subsequent histological sectioning. Also the probe can be visualized using radiological methods (e.g. using the Faraday effect) and become part of a radiological image. As used herein, the term "radiological images" refers to images generated from radiological data.

Preferably, radiological methods are computed tomographic radiological methods, which produce 3D reconstructions of a specimen or virtual sections through a specimen. Examples for radiological methods include X-ray computed tomography (CT), micro-CT, magnetic resonance imaging (MRI), including dynamic MRI, and functional MRI, magnetic resonance spectroscopy (MRS), magnetic resonance microscopy (MRM), positron-emission-tomography (PET) and other methods of nuclear medicine (such as single photon emission computed tomography (SPECT). Other radiological methods include conventional angiography and sonographic methods such as ultrasound sonography and blood flow imaging using ultrasound sonography. Optical imaging in the near infrared spectrum allows to follow fluororescently labeled probes in vivo and in vitro. The signal in the near infrared spectrum is recorded using a CCD-camera or an optical tomograph.

MRI generates images that result from the effects of strong magnetic fields (typically 1.5 Tesla) applied to the specimen, especially biological specimen. The precise parameter measured depends on the application and the particular MR equipment. Two major parameters can be distinguished, the time constants T1 and T2. Essentially, in T1-weighted images the signal of structures with high water content is comparatively weak and the signal of structures with high fat content is strong. In T2-weighted images, the relationship is reversed. Several further parameters can be measured. E.g. oxygenated and deoxygenated hemoglobin have different magnetic properties, allowing a blood oxygen level detection (BOLD). BOLD can be used to provide functional data, as blood oxygen level can vary under different conditions. Recording functional data by MR is called functional MRI (fMRI), a special embodiment of MRI. E.g., in neuroscientific experiments, local oxygen consumption in different brain regions can be measured during the performance of cognitive tasks. BOLD thus allows to locate regions of high neuronal activity during specific tasks. Recording the change of MR signals over time can yield information about dynamic changes and is referred to as dynamic MRI. E.g., inflow and distribution of a an appropriately labeled (see below) pharmaceutical into a tumor can be followed over time. It is an object of the present invention to provide a method that will allow to compare functional and dynamic MR data with histological data.

MR angiography is a another embodiment of MRI preferred in the scope of the present invention. MR angiography allows to investigate the vascular architecture of a tumor by use of extravascular or intravascular contrast-enhancing agents (see below). Another preferred modification is time of flight (TOF) angiography, which works without contrast-enhancing agents.

MR spectroscopy allows to reveal metabolic maps, e.g. regarding cholin containing compounds, creatin, lipids, citrate and others.

The spatial resolution of MRI is affected by the strength of the magnetic field, the scanning time and movements of the specimen. Typically, the spatial resolution of MRI is about 2 mm. Higher resolution can be achieved by use of stronger magnetic fields, e.g. 4 Tesla. Using such strong magnetic fields it is possible to reach spatial resolutions of less than 1 mm.

High spatial resolution can be achieved using micro-CT and MRM (magnetic resonance microscopy). However, for micro-CT the applied radiation dose is very high, limiting its use essentially to animal experiments. MRM relies on very specialized equipment, which is not widely available. Usually, only small specimen can be analyzed. To achieve high resolution, the scanning times in MRM are prolonged, limiting its application to little moving specimen such as strongly anesthetized animals. Due to the long scanning times, it is not possible to gather dynamic or functional data.

As has become clear from the above description, MR measures physical parameters whose biological significance is not always clear. It is important to verify and interpret MR data on other standards, e.g. histological data.

The advantage of magnetic resonance methods (MRM, MRI, dynamic and functional MRI, MRS) is that these methods involve no exposure to radiochemicals. The relevance of MR will be increased in the future by development of specific contrast-enhancing agents that allow to label specific organs, tissues, cells and cellular substructures. E.g. contrast-enhancing agents can be covalently and non-covalently coupled to antibodies, nucleotide bases, peptides, lectins, liposomes and viruses. All of these methods will need histological data for verification and interpretation of the results.

PET and SPECT allows to follow radioactively labeled tracers. Many of these tracers are already commercially available. $H_2^{13}O$ allows to reveal dynamic data on vasculature (e.g. perfusion (blood flow) and vessel permeability). Radioactive isotopes can be incorporated e.g. in antibodies and fragments thereof, nucleotide bases, peptides, lectins, liposomes and viruses. This allows to label organs, tissues, cells and cellular substructures in vivo or in vitro. PET and SPECT are more versatile and more sensitive than MR techniques, but their spatial resolution is lower (usually 10 times lower, in some cases even 300 times lower). The use of radioactive tracers results in radioactive radiation exposure of the specimen.

Ultrasound allows to measure tissue perfusion, blood volume and blood flow. Air-filled microbubbles can be used as contrast-enhancing agents. In future, these microbubbles may also be coupled to other molecules to enable imaging of more specific organs, tissues, cells and cellular substructures in vivo. Ultrasound is also an important method to analyze non-biological materials. For example, in synthetic materials air bubble inclusions can be analysed non-invasively.

As radiological methods are non- or minimally invasive, it is possible to use several different radiological methods for the same specimen (compare Fig. 6B and Fig. 7B)

Preferred are radiological methods that yield information about the distribution biological markers. More preferred are methods that yield information about the distribution of specifically labeled cells and tissues. More preferred are methods that yield information about blood vessel architecture (microvessel distribution), blood flow (such as flow analysis using ultrasound sonography), distribution of specifically labeled cells neural activity, apoptosis, (SPECT and PET). Some of the above methods, such as ultrasound sonography, may also be used with non-biological specimen.

Some radiological methods are commonly used in combination with contrast-enhancing agents. E.g. for X-ray imaging, preferably X-ray computed tomography, elements of high atomic number such as iodine or barium can be used, as they strongly absorb X-rays. E.g. barium sulphate is frequently used to image the gastrointestinal tract. Iodine-containing media are used for visualization of the gastrointestinal tract, for angiography, cholangiography (e.g. Iohexol), lymphography, myelograpyh and urography.

Typical contrast-enhancing agents for magnetic resonance imaging are gadolinium chelates, e.g. Gadolinium-diethylene triamine pentaacetic acid (Gd-DTPA). Additional methods are available or under development to specifically target organs, tissues, cells or cellular substructures with MRI contrast-enhancing agents. E.g., gadolinium can be complexed with compounds taken up specifically by certain organs, tissues, cells or cellular substructures. Gadolinium can also be present in chelates that are activated enzymatically. E.g., activation by beta-galactosidase allows to follow the expression of beta-galactosidase in a transgenic animal. Cells can be labeled with superparamagnetic iron oxide particles. Antibodies, antibody fragments and receptor ligands can be covalently or non-covalently coupled with lanthanides or superparamagnetic particles as MRI contrast-enhancing agents. MRI is thus able to trace specific markers or cells or tissues of interest. All these contrast-enhancing agents can be used within the present invention. In particular, it is possible to use the histological analysis, quantification and comparison tools provided by the present invention to analyze the suitability of such contrast-enhancing agents. E.g. the present invention can provide a standard to analyze the efficiency and specificity of such contrast-enhancing agents.

SPECT and PET are based on the detection of radioactive trace amounts. Molecules of interest, tracers, are labelled with radioactive isotopes. The labelled tracers commonly used include isotopes such as $^{11}$C, $^{18}$F, $^{15}$O, $^{13}$N, $^{86}$Y, $^{90}$Y, and $^{16}$Co. These tracers can be used to specifically target organs, tissues, cells and cellular substructures.

The methods according to the invention are also laid out in the following working examples which serve to illustrate the invention but do not limit the scope of the invention in any way.

### Example 1

A 2-week old human squamous cell carcinoma of the line HaCaT-ras-A-5RT3 served as a tissue specimen. The carcinoma was induced by injecting $2 \times 10^5$ tumor cells subcutaneously into a nude mouse. The mouse was sacrificed and the tumor was excised. The tumor was covered with OCT tissue tek (Sacura, Zoeterwoude) and fixed by freezing in liquid nitrogen.

Using a Reichert-Jung Frigocut 2700 microtome, 5 µm thick sections were prepared from the tumor in a distance of 50 µm. The blood vessels in the sections were stained by immunofluorescence with a rat monoclonal antibody directed against human PECAM (CD-31, PharMingen, San Diego, California) according to a standard protocol (Skobe M, Rockwell P, Goldstein N, Vosseler S, Fusenig NE. Halting angiogenesis suppresses carcinoma cell invasion. Nature medicine 1997; 3(11): 1222-27). Secondary antibody was a Cy3-labeled anti-rat IgG.

Using fluorescence microscopy the sections were photographed with a Soft Imaging System ColorView XS camera using an Olympus AX-70 microscope at 40 x enlargement (relationship of object size to image size on the camera chip). The single images of one section were assembled using the Multiple Image Alignment Algorithm of the AnalySIS software by Soft Imaging Systems. The images were adjusted manually to compensate for sectioning and staining artefacts, and they were transformed into a binary data set. Furthermore, the layers were roughly registered manually to reduce the computing effort in the next step. The actual orientation of the layers was performed using the Automated Image Registration (AIR) Package (Woods RP, Grafton ST, Holmes CJ, Cherry SR, Mazziotta JC. Automated image registration: I. General methods and intrasubject, intramodality validation. Journal of Computer Assisted Tomography 1998; 22:139-152.), which is included in the software MEDx 3.4.1 (Sensor Systems). AIR employed a "2D affine 6 parameter" model.

In the following, the single sections were arranged into a 3D image stack, taking into account the thickness of the tissue sections. The implementation was done using the software libraries ipPic and ipFunc (Schröter A, Engelmann U. ipPic Library. A portable library for the PIC image file format. Technical Report 75, DKFZ 1995). In the following the image stack was imported into the software system EchoAnalyzer (Wolf I, De Simone R, Glombitza G, Meinzer HP. EchoAnalyzer - A system for three-dimensional echocardiographic visualization and quantification. Lemke HU, Vannier MW, Inamura K, Farmann AG, Doi K (Eds). CARS 2001: Proceedings of the 15th International Congress and Exhibition. Amsterdam, Elsevier 2001: 902-907) and, using its available visualization functions, displayed in different manners.

Firstly, 3D views onto the entire image stack were generated from different directions. (threshold value: grey value 125; light 0°: 0,50; light 45° 2,00; layer distance 50 µm) (Fig. 1). For this procedure the Heidelberg Raytracing Model was used as the visualization method. In this method, a view onto the image material is simulated with two light sources.

Depending on the thickness of the displayed object the incoming light is reflected in different intensity.

For further representation, parallel sections were prepared based on the 3D reconstructed data volume by using the Slicer-Plugins of the teleradiologic work station CHILI. These sections were generated in the desired orientation (see Fig. 2: 90° orientation to the direction of the original histological sections). Both the number of layers and the thickness of the layer can be specified freely (in the example: 100 single images and a total thickness of the stack of 2 mm). Finally, by choosing a frontal view onto the section, it was possible to generate images of 2D virtual sections of specified layers in which the intensity of single image points serves as a measure for the relative proportion of labelled blood vessels in a given volume unit. To compare parameter maps and summation images with single fluorescent images a parameter chart parallel to the original plane of section was prepared (Fig. 3). In this figure, the summed fluorescent images consisting of 1, 16, and 28 layers is compared with the respective parameter map in which the fraction of fluorescent labelled voxels is coded by colour from 0-100 %.

## Example 2

Magnetic resonance imaging (MRI) was performed on a clinical 1.5 Tesla whole-body MR-system (Siemens Magnetom Vision, Erlangen, Germany) using a custom-made radio-frequency-(rf) coil ("animal resonator") for rf excitation and signal reception. The rf coil was designed as a cylindrical volume resonator with an inner diameter of 83 mm and a useable length of 120 mm. To optimize the available signal-to-noise ratio, manual tuning and matching of the coil's resonance circuitry was performed for each animal individually.

The animal was examined with dynamic contrast-enhanced T1-weighted MRI using the gradient echo sequence FLASH: TR=100 ms, TE=6.5 ms, flipangle $\alpha$=90°, 1 acquisition, TA=8 sec, field of view=35 mm x 35 mm, matrix=64x64, slice thickness=2 mm, voxel size=2.0x0.5x0.5 mm$^3$. During an overall measurement time of 8 minutes 60 measurements were obtained. Six transversal slices were placed, four covering the tumor and two at the position of the kidneys.

Following Gd-DTPA injection signal intensity time curves have been recorded. Analysis of the dynamic data was based on a pharmacokinetic two compartment model. Compartment one is the intravascular and compartment two the extravascular extracellular space (EES). After infusion of the contrast agent there is an exchange of contrast agent between both compartments, described by the rate constant $k_{ep}$. $k_{ep}$ is closely related to the slope of the signal intensity time curve. Another functional parameter is the amplitude A, the relative change in signal intensity. It occurs after the contrast media injection. While amplitude A predominantly reflects the plasma volume, the rate constant $k_{ep}$ is highly influenced by the vessel permeability.

Based on this model the measured data were analysed. The signal-time-course was fitted by a Levenberg-Marquard-algorithm to the following model equation:

$$\frac{S_{KM}}{S_0}(t) = 1 + \frac{A}{\tau} \cdot \left\{ \frac{k_{ep} \cdot e^{-k_{el}(t-t_{lag})}}{k_{el}(k_{ep}-k_{el})}\left(e^{k_{el}t'}-1\right) - \frac{\cdot e^{-k_{ep}(t-t_{lag})}}{k_{ep}-k_{el}}\left(e^{k_{ep}t'}-1\right)\right\}$$

with the amplitude:

$$A = \frac{D}{V_{plasm}a} \cdot V_e \cdot f_1(TR,TE,T_{10},\alpha,\beta)$$

and:

$$t' = \begin{cases} 0 & : t < t_{lag} \\ t - t_{lag} & : t_{lag} < t < \tau + t_{lag} \\ \tau & : t > \tau + t_{lag} \end{cases}$$

The fitting parameters were A, $k_{ep}$, the renal elimination constant $k_{el}$ and the time delay of signal enhancement $t_{lag}$. The amplitude A is proportional to the contrast agent dose D and the fraction of extravascular extracellular space ve and it is anti-proportional to the plasma distribution volume $V_{plasma}$. Further A depends on sequence and tissue parameters as the repetition time TR, the echo time TE, the native T1-time $T_{10}$ and the contrast agent relaxivities $\alpha$ and $\beta$. S is the signal intensity, $\tau$ is the infusion time.

The parameters were determined pixelwise, color coded and overlayed to the morphological MR images.

## Example 3

For MR angiography, a clinical 1.5 Tesla (T) whole-body scanner with a gradient strength of 25 mT/m and a gradient rise time to maximum of 600 ms (Magnetom Vision, Siemens, Erlangen, Germany) was used in a combination with a custom-made transmit-receive radio-frequency-(rf) coil. The rf coil was designed as a cylindrical volume resonator with an inner diameter of 83 mm and a useable length of 120 mm. To optimize the available signal-to-noise ratio (SNR), manual tuning and matching of the coil's resonance circuitry was performed for each animal individually. The animal was examined in prone position. The imaging protocol used a dedicated high-resolution three-dimensional gradient echo MRA pulse sequence (FLASH 3D, TR/TE=13.3/6.2 ms, FA=50°, BW=150 Hz/pixel, NEX=1). Images were acquired in coronal orientation with a slab thickness of 32 mm and 100 partitions, which resulted in a partition thickness of 320 μm. The FOV was set to 74x85 mm which, in a combination with a matrix of 358x512, resulted in a voxel size of 166x206x320 μm3. With the chosen sequence parameters the scan time was 8:03 minutes.

The gadolinium-based macromolecular MR contrast agent Gadomer-17 (Schering AG, Berlin, Germany) was used in this study. The contrast agent consists of a water soluble 24-gadolinium dendrimer with a molecular weight of 17 kDa. Due to the globular shape of the molecule the apparent molecular weight is approximately 30 kDa, which results in a reduced diffusion into the extravascular compartment. In addition to its blood-pool characteristics, Gadomer-17 offers a high T1 relaxivity (0.47 T, 40°) of 17 L/mmol.s, which is approximately five times higher than that of gadopentetate dimeglumine (Gd-DTPA). Gadomer-17 has a low toxicity and is eliminated by glomerular filtration. Gadomer-17 was chosen for this study because of its blood pool characteristics and its favourable T1 relaxivity which were required to overcome signal-to-noise limitations of the high-resolution MRA pulse sequence. Similar to previous studies dealing with MRA, Gadomer-17 was injected intravenously with a dose of 100 μmol/kg body weight (19-21). The injection was followed by a saline flush of 0.1 to 1 mL, which amounted to a total injection volume in the range of 0.3 to 1.1 mL for nude mice and rats, respectively.

All image data were processed with maximum intensity projections (MIP) and multiplanar reformations (MPR). To achieve a good correlation of the angiographic images with the histological sections, MPRs were calculated parallel to the cutting plane of the histological sections.

## Claims

**1.** Method for 3D visualization and quantification of histological section data, including the following steps:

A) creating a radiological image of a specimen,

B) cutting said specimen or a specimen overlapping with said specimen into histological sections,

C) taking photographic images of said histological sections,

D) registration of the images according to step C) based on overall similarity in the horizontal plane (in the XY-plane),

E) creating a (virtual) stack of said registered images in the vertical direction (along the Z-axis),

F) creating a virtual section of the same thickness, level and direction as the section represented by the radiological image,

G) creating a 2-dimensional image of said virtual section created according to step F,

H) comparing the 2-dimensional image according to step G) with the radiological image created according to step A).

2. Method according to claim 1 wherein steps C) - E) are performed on a subset of the histological sections according to step B).

3. Method according to claims 1 or 2 wherein the photographic images of step C) are assembled in the horizontal plane (XY-plane) from a plurality of images of the histological section.

4. Method according to claims 2 or 3 wherein the specimen is large.

5. Method according to any of claims 1 to 4 wherein a motorized microscope is being used for image acquisition according to step C)

6. Method according to any of claims 1 to 5 wherein structures on the histological sections photographed in step C) are stained.

7. Method according to any of claims 1 to 6 wherein different structures are visualized on different histological sections photographed in step C), namely by using two different staining methods alternating on the consecutive images along the Z-axis.

8. Method according to any of claims 1 to 7 wherein the virtual stack according to step E) is visualized by volume rendering or surface rendering.

9. Method according to any of claims 1 to 8 wherein the image created according to step G) is a parameter map.

10. Method according to any of claims 1 to 9 wherein the image created according to step G) is created on a region of interest (ROI) chosen in the virtual section of step F).

11. Method according to any of claims 1 to 10 wherein comparison in step H) is done by creating a third image by subtraction or addition of the pixel values in corresponding positions of each image according to step A) and step G).

12. Method according to any of claims 1 to 11, wherein the radiological image is generated by MRI.

13. Use of a method according to any of claims 1 to 12 to analyze a biological specimen.

14. Use of a method according to any of claims 1 to 12 to analyze a specimen derived from a tumor, the central nervous system, liver, kidney, thymus, lymph nodes, muscle or spleen.

15. Use of a method according to any of claims 1 to 12 to analyze a non-biological specimen.

# Figure 1:

**Figure 2:**

**Figure 3:**

**Figure 4:**

**Figure 5:**

**Figure 6:**

**Figure 7:**

**European Patent Office**

## EUROPEAN SEARCH REPORT

Application Number

EP 03 00 8877

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | OURSELIN, S.: "Recalage d'images médicales par appariement de régions - Application à la construction d'atlas histologiques 3D" 2002 , L'INRIA , SOPHIA ANTIPOLIS XP002252673 * chapters 2, 9 and 10 * | 1-15 | G06T7/00 G06T17/40 |
| A | VAN DER KUIJL, B., DE BONT, L., STEGENGA B., BOERING G.: "Histologic Evaluation of Computed Tomographic TMJ Articular Disk Visualization" THE JOURNAL OF CRANIOMANDIBULAR PRACTICE, vol. 12, no. 2, April 1994 (1994-04), pages 100-109, XP009016215 * abstract * * page 103, right-hand column, paragraph 2 * | 1 | |

TECHNICAL FIELDS SEARCHED (Int.Cl.7)

G06T
G06F

The present search report has been drawn up for all claims

| Place of search | Date of completion of the search | Examiner |
|---|---|---|
| MUNICH | 28 August 2003 | Engels, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)